# EUROPEAN PATENT APPLICATION

(11) **EP 4 095 848 A1**
(43) Date of publication of application: **30.11.2022**
(21) Application number: 21761565.7
(22) Date of filing: 23.02.2021
(51) Int. Cl.: G10L 15/20, G10L 15/22, G10L 15/12

(54) **OPTIMIZATION METHOD AND SYSTEM FOR IMPROVING VOICE RECOGNITION RATE**

(30) Priority: 25.02.2020 CN 202010118121
(71) Applicant: Qingdao Haier Air Conditioner General Corp., Ltd., Qingdao, Shandong 266101 (CN); Haier Smart Home Co., Ltd., Qingdao, Shandong 266101 (CN)
(72) Inventor: WU, Hongjin, Qingdao, Shandong 266101 (CN); CHEN, Yundong, Qingdao, Shandong 266101 (CN); LIN, Chao, Qingdao, Shandong 266101 (CN)
(74) Representative: Ziebig Hengelhaupt Intellectual Property Attorney Patentanwaltsanwaltskanzlei PartGmbB
(86) International application number: PCT/CN2021/077401
(87) International publication number: WO 2021/169936

(57) **Abstract**

An optimization method and system for improving a voice recognition rate. The method comprises: acquiring a voice signal output currently; determining the use frequency of the voice signal output currently; and determining whether the use frequency of the voice signal output currently is greater than a use frequency threshold value, and if so, controlling an intelligent device on the basis of the voice signal output currently. The present invention can effectively improve the voice recognition rate of an intelligent device by means of a set use frequency threshold value, thereby preventing the intelligent device from being operated by mistake, and improving the user experience.

## Description

### FIELD OF THE INVENTION

The invention relates to the technical field of voice interaction, in particular to an optimization method and system for improving a voice recognition rate.

### BACKGROUND OF THE INVENTION

At present, with the continuous development of voice interaction technology, more and more intelligent devices can be controlled by voice. However, a fake interactive wake-up or a false wake-up is likely to occur among different voice interaction systems. For example, sound in TV programs may operate other intelligent devices by mistake, such as air conditioners and refrigerators.

Therefore, how to effectively improve a voice recognition rate of intelligent devices is an urgent problem to be solved.

### BRIEF DESCRIPTION OF THE INVENTION

In view of this, the invention provides an optimization method for improving a voice recognition rate, the method including:
obtaining a voice signal output currently;
determining a use frequency of the voice signal output currently;
judging whether the use frequency of the voice signal output currently is greater than a use frequency threshold, and if so, and
controlling an intelligent device based on the voice signal output currently.

Preferably, before the obtaining a voice signal output currently, the method further includes:
recording use data of a user successfully controlling the intelligent device, wherein the use data includes: a sound frequency and a control keyword of the user successfully controlling the intelligent device;
calculating a use frequency of the use data of the user successfully controlling the intelligent device;
setting the use frequency threshold based on the use frequency of the use data of the user successfully controlling the intelligent device; and
building a voice database based on the sound frequency and the control keyword of the user successfully controlling the intelligent device, and the use frequency of the use data of the user successfully controlling the intelligent device.

Preferably, the voice signal output currently includes: a voice frequency and a control keyword output currently, and the determining a use frequency of the voice signal output currently includes:
searching for a corresponding use frequency in the voice database based on the voice frequency and the control keyword output currently.

Preferably, after the controlling an intelligent device based on the voice signal output currently, the method further includes:
recording the voice signal output currently, taking the voice signal output currently as the use data of the user successfully controlling the intelligent device, and dynamically adjusting the use frequency threshold.

Preferably, the method further includes:
forbidding controlling the intelligent device based on the voice signal output currently when the use frequency of the voice signal output currently is less than or equal to the use frequency threshold.

The invention further provides an optimization system for improving a voice recognition rate, the system including:
an obtaining module used for obtaining a voice signal output currently;
a determining module used for determining a use frequency of the voice signal output currently;
a judging module used for judging whether the use frequency of the voice signal output currently is greater than a use frequency threshold; and
a controlling module used for controlling an intelligent device based on the voice signal output currently when the use frequency of the voice signal output currently is greater than the use frequency threshold.

Preferably, the system further includes:
a recording module used for recording use data of a user successfully controlling the intelligent device, wherein the use data includes: a sound frequency and a control keyword of the user successfully controlling the intelligent device;
a calculating module used for calculating a use frequency of the use data of the user successfully controlling the intelligent device;
s setting module used for setting the use frequency threshold based on the use frequency of the use data of the user successfully controlling the intelligent device; and
a building module used for building a voice database based on the sound frequency and the control keyword of the user successfully controlling the intelligent device, and the use frequency of the use data of the user successfully controlling the intelligent device.

Preferably, the voice signal output currently includes: a voice frequency and a control keyword output currently, and the determining module is specifically used for:
searching for a corresponding use frequency in the voice database based on the voice frequency and the control keyword output currently.

Preferably, the recording module is further used for:
recording the voice signal output currently, taking the voice signal output currently as the use data of the user successfully controlling the intelligent device, and dynamically adjusting the use frequency threshold.

Preferably, the system further includes:
a forbidding module used for forbidding controlling the intelligent device based on the voice signal output currently when the use frequency of the voice signal output currently is less than or equal to the use frequency threshold.

In conclusion, disclosed in the invention is an optimization method for improving a voice recognition rate: when there is a need to improve a voice recognition rate of an intelligent device, firstly a voice signal output currently is obtained, then a use frequency of the voice signal output currently is determined, and whether the use frequency of the voice signal output currently is greater than a use frequency threshold is judged, and if so, the intelligent device is controlled based on the voice signal output currently. The invention can effectively improve the voice recognition rate of the intelligent device by means of a set use frequency threshold, thereby preventing the intelligent device from being operated by mistake, and improving the user experience.

### BRIEF DESCRIPTION OF THE DRAWINGS

In order to describe the technical solutions in the embodiments of the invention or the prior art more clearly, the following briefly introduces the accompanying drawings required for describing the embodiments or the prior art. Apparently, the accompanying drawings in the following description show only some embodiments of the invention, and those of ordinary skill in the art may still derive other drawings from these drawings without any creative efforts.
FIG. 1 is a method flowchart of embodiment 1 of an optimization method for improving a voice recognition rate disclosed in the invention;
FIG. 2 is a method flowchart of embodiment 2 of an optimization method for improving a voice recognition rate disclosed in the invention;
FIG. 3 is a structural schematic diagram of embodiment 1 of an optimization system for improving a voice recognition rate disclosed in the invention; and
FIG. 4 is a structural schematic diagram of embodiment 2 of an optimization system for improving a voice recognition rate disclosed in the invention.

### DETAILED DESCRIPTION

The technical solutions in the embodiments of the invention are clearly and completely described below in conjunction with the accompanying drawings in the embodiments of the invention. Apparently, the embodiments described are only a part rather than all of the embodiments of the invention. All other embodiments obtained by those of ordinary skill in the art based on the embodiments in the invention without any creative efforts shall fall within the protection scope of the invention.

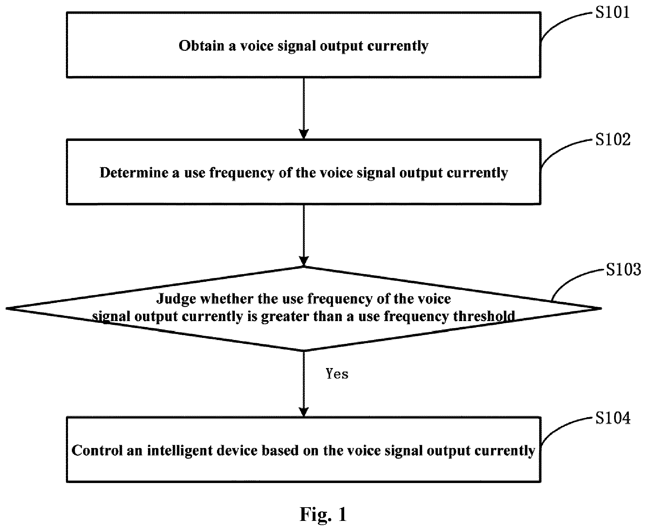

As shown in FIG. 1, it is a method flowchart of embodiment 1 of an optimization method for improving a voice recognition rate disclosed in the invention, and the method may include the following steps:
S101, obtain a voice signal output currently;
   when there is a need to improve a voice recognition rate of an intelligent device, firstly the voice signal output currently is obtained, that is, firstly the voice signal output currently for controlling the intelligent device is obtained. For example, a "turn on the air conditioner" voice signal output currently for controlling an air conditioner is obtained.
S102, determine a use frequency of the voice signal output currently;
   the use frequency of the voice signal output currently is further determined after obtaining the voice signal output currently. For example, the use frequency of the "turn on the air conditioner" voice signal output currently is determined.
S103, judge whether the use frequency of the voice signal output currently is greater than a use frequency threshold, and if so, proceeding to S104:
   whether the use frequency of the voice signal output currently is greater than the set use frequency threshold is further judged after determining the use frequency of the voice signal output currently.
S104, control the intelligent device based on the voice signal output currently.

The intelligent device can be controlled according to the voice signal output currently when the use frequency of the voice signal output currently is greater than the set use frequency threshold. For example, the air conditioner can be controlled to turn on according to the "turn on the air conditioner" voice signal output currently when the use frequency of the "turn on the air conditioner" voice signal output currently is greater than the set use frequency threshold.

In conclusion, in the above embodiment, when there is a need to improve a voice recognition rate of an intelligent device, firstly a voice signal output currently is obtained, then a use frequency of the voice signal output currently is determined, and whether the use frequency of the voice signal output currently is greater than a use frequency threshold is judged, and if so, the intelligent device is controlled based on the voice signal output currently. The invention can effectively improve the voice recognition rate of the intelligent device by means of a set use frequency threshold, thereby preventing the intelligent device from being operated by mistake, and improving the user experience.

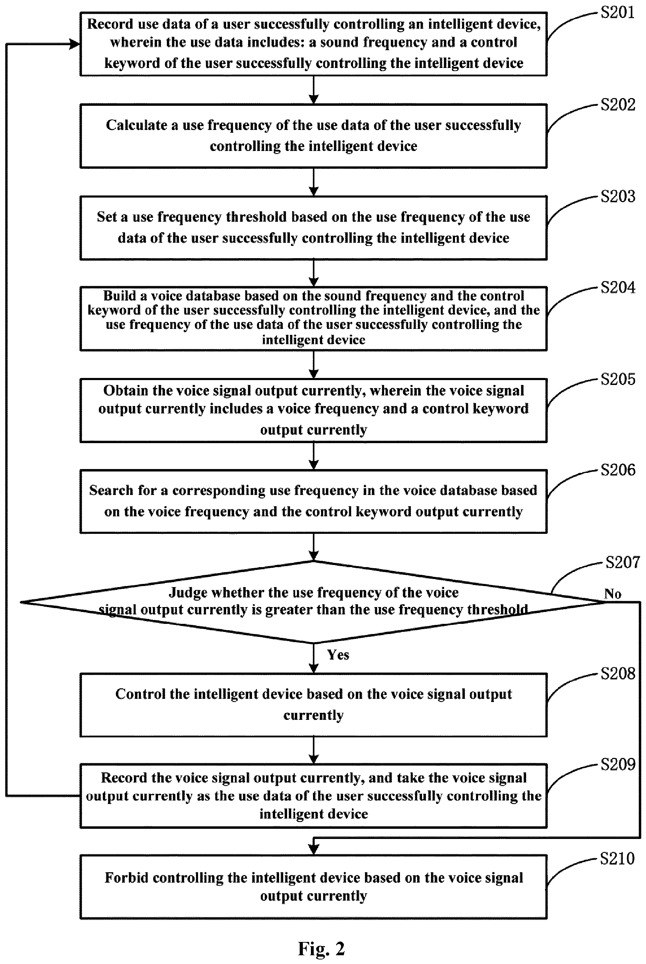

As shown in FIG. 2, it is a method flowchart of embodiment 2 of an optimization method for improving a voice recognition rate disclosed in the invention, and the method may include the following steps:
S201, record use data of a user successfully controlling an intelligent device, where the use data includes: a sound frequency and a control keyword of the user successfully controlling the intelligent device;
   when there is a need to improve the voice recognition rate of the intelligent device, the use data of the user successfully controlling the intelligent device is recorded, that is, the use data of the user successfully controlling the intelligent device is recorded in the history of controlling the intelligent device by voice. For example, in the history of controlling the intelligent device, when user 1 outputs voice signals such as "turn on the air conditioner", "cooling", "heating", and "dehumidifying", a sound frequency and a control keyword of the voice signals output by the user 1 such as "turn on the air conditioner", "cooling", "heating", and "dehumidifying" are recorded if the intelligent device can be successfully controlled by the above voice signals.
S202, calculate a use frequency of the use data of the user successfully controlling the intelligent device;
   after recording the use data of the user successfully controlling the intelligent device, the use frequency of the use data of the user successfully controlling the intelligent device is further calculated according to the recorded use data. For example, when the number of times the user 1 successfully controls the intelligent device by outputting the "turn on the air conditioner" voice signal is 5, the use frequency of the "turn on the air conditioner" voice signal output by the user 1 is 5 times.
S203, set a use frequency threshold based on the use frequency of the use data of the user successfully controlling the intelligent device;
   after calculating the use frequency of the use data of the user successfully controlling the intelligent device, a corresponding use frequency threshold is further set according to the use frequency of the use data of the user successfully controlling the intelligent device. For example, when the use frequency of the "turn on the air conditioner" voice signal output by the user 1 is 5 times, the use frequency threshold of the "turn on the air conditioner" voice signal output by the user 1 may be set to 5 times, 4 times, etc.
S204, build a voice database based on the sound frequency and the control keyword of the user successfully controlling the intelligent device, and the use frequency of the use data of the user successfully controlling the intelligent device;
   then the voice database is built according to the sound frequency and the control keyword of the user successfully controlling the intelligent device, and the use frequency of the use data of the user successfully controlling the intelligent device. For example, the built voice database includes the sound frequency of the voice signal "turn on the air conditioner" output by the user 1, the control keyword "turn on the air conditioner", and the use frequency 5 times.
S205, obtain a voice signal output currently, wherein the voice signal output currently includes: a voice frequency and a control keyword output currently;
   when there is a need to control the intelligent device by voice, the voice signal output currently is obtained, that is, firstly the voice signal output currently for controlling the intelligent device is obtained. For example, the "turn on the air conditioner" voice signal output currently for controlling an air conditioner is obtained.
S206, search for a corresponding use frequency in the voice database based on the voice frequency and the control keyword output currently;
   after obtaining the voice signal output currently, the corresponding use frequency is further searched in the built voice database according to the voice frequency and the control keyword of the voice signal output currently. For example, the voice signal output currently is the "turn on the air conditioner" voice signal output by the user 1. Firstly, the same voice frequency as user 1 is searched in the voice database, and then the control keyword "turn on the air conditioner" is searched in the same voice frequency as user 1, and the use frequency with the same voice frequency as user 1 and the control keyword "turn on the air conditioner" is determined in the voice database; assuming that the use frequency is 5 times, then the determined use frequency of the voice signal output currently is 5 times.
S207, judge whether the use frequency of the voice signal output currently is greater than a use frequency threshold, and if so, proceeding to S208, and if not, proceeding to S210:
   whether the use frequency of the voice signal output currently is greater than a set use frequency threshold is further judged after determining the use frequency of the voice signal output currently.
S208, control the intelligent device based on the voice signal output currently;
   the intelligent device can be controlled according to the voice signal output currently when the use frequency of the voice signal output currently is greater than the set use frequency threshold. For example, the air conditioner can be controlled to turn on according to the "turn on the air conditioner" voice signal output currently when the use frequency of the "turn on the air conditioner" voice signal output currently is greater than the set use frequency threshold.
S209, record the voice signal output currently, take the voice signal output currently as the use data of the user successfully controlling the intelligent device, and dynamically adjust the use frequency threshold;
   when the intelligent device can be controlled by the voice signal output currently, the voice signal output currently is recorded, and the voice signal output currently is taken as the use data of the user successfully controlling the intelligent device; returning again to perform the above step S201, the use frequency threshold is reset again based on the updated use data of the user successfully controlling the intelligent device, that is, by dynamically adjusting the use frequency threshold, the voice recognition rate of the intelligent device can be further improved.
S210, forbid controlling the intelligent device based on the voice signal output currently.

When the use frequency of the voice signal output currently is less than or equal to the set use frequency threshold, controlling the intelligent device based on the voice signal output currently is forbidden, that is, the voice signal output currently cannot control the intelligent device, which effectively prevents the intelligent device from being controlled by mistake.

In conclusion, on the basis of the above embodiment, the embodiment can build a voice database and set a use frequency threshold by recording use data of a user successfully controlling an intelligent device, obtain, through the built voice database, a use frequency of a voice signal output currently, and compare the use frequency of the voice signal output currently with the set use frequency threshold, which can improve a voice recognition rate of the intelligent device and effectively avoid operation by mistake; and when the voice signal output currently can control the intelligent device, the voice signal output currently is further taken as the use data of the user successfully controlling the intelligent device, and the use frequency threshold is dynamically adjusted, thereby further improving the voice recognition rate of the intelligent device.

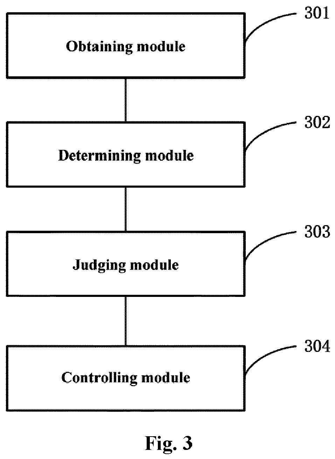

As shown in FIG. 3, it is a structural schematic diagram of embodiment 1 of an optimization system for improving a voice recognition rate disclosed in the invention, and the system may comprise:
an obtaining module 301 used for obtaining a voice signal output currently;
when there is a need to improve a voice recognition rate of an intelligent device, firstly the voice signal output currently is obtained, that is, firstly the voice signal output currently for controlling the intelligent device is obtained. For example, a "turn on the air conditioner" voice signal output currently for controlling an air conditioner is obtained.

A determining module 302 used for determining a use frequency of the voice signal output currently;
the use frequency of the voice signal output currently is further determined after obtaining the voice signal output currently. For example, the use frequency of the "turn on the air conditioner" voice signal output currently is determined.

A judging module 303 used for judging whether the use frequency of the voice signal output currently is greater than a use frequency threshold;
whether the use frequency of the voice signal output currently is greater than a set use frequency threshold is further judged after determining the use frequency of the voice signal output currently.

A controlling module 304 used for controlling the intelligent device based on the voice signal output currently when the use frequency of the voice signal output currently is greater than the use frequency threshold.

The intelligent device can be controlled according to the voice signal output currently when the use frequency of the voice signal output currently is greater than the set use frequency threshold. For example, the air conditioner can be controlled to turn on according to the "turn on the air conditioner" voice signal output currently when the use frequency of the "turn on the air conditioner" voice signal output currently is greater than the set use frequency threshold.

In conclusion, in the above embodiment, when there is a need to improve a voice recognition rate of an intelligent device, firstly a voice signal output currently is obtained, then a use frequency of the voice signal output currently is determined, and whether the use frequency of the voice signal output currently is greater than a use frequency threshold is judged, and if so, the intelligent device is controlled based on the voice signal output currently. The invention can effectively improve the voice recognition rate of the intelligent device by means of a set use frequency threshold, thereby preventing the intelligent device from being operated by mistake, and improving the user experience.

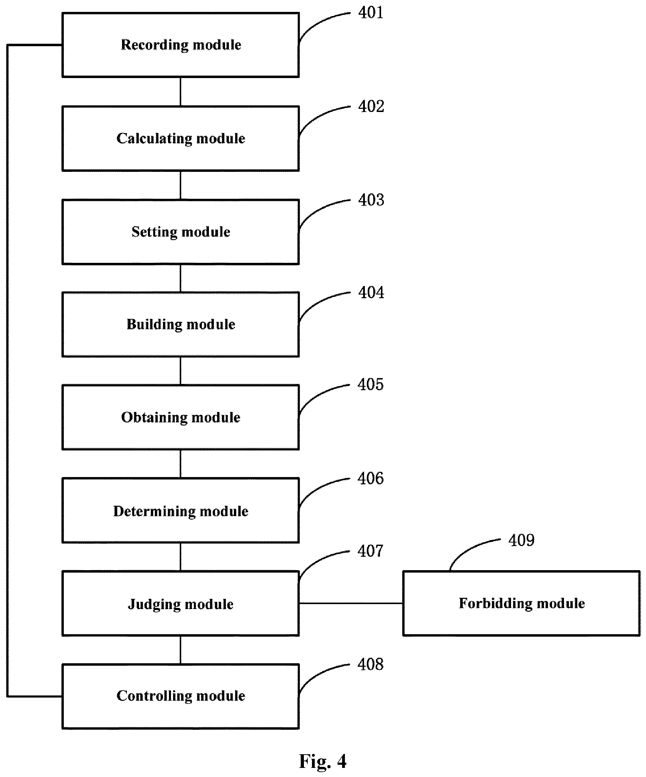

As shown in FIG. 4, it is a structural schematic diagram of embodiment 2 of an optimization system for improving a voice recognition rate disclosed in the invention, and the system may comprise:
a recording module 401 used for recording use data of a user successfully controlling an intelligent device, wherein the use data includes: a sound frequency and a control keyword of the user successfully controlling the intelligent device;
when there is a need to improve the voice recognition rate of the intelligent device, the use data of the user successfully controlling the intelligent device is recorded, that is, the use data of the user successfully controlling the intelligent device is recorded in the history of controlling the intelligent device by voice. For example, in the history of controlling the intelligent device, when user 1 outputs voice signals such as "turn on the air conditioner", "cooling", "heating", and "dehumidifying", a sound frequency and a control keyword of the voice signals output by the user 1 such as "turn on the air conditioner", "cooling", "heating", and "dehumidifying" are recorded if the intelligent device can be successfully controlled by the above voice signals.

A calculating module 402 used for calculating a use frequency of the use data of the user successfully controlling the intelligent device;
after recording the use data of the user successfully controlling the intelligent device, the use frequency of the use data of the user successfully controlling the intelligent device is further calculated according to the recorded use data. For example, when the number of times the user 1 successfully controls the intelligent device by outputting the "turn on the air conditioner" voice signal is 5, the use frequency of the "turn on the air conditioner" voice signal output by the user 1 is 5 times.

A setting module 403 used for setting a use frequency threshold based on the use frequency of the use data of the user successfully controlling the intelligent device;
after calculating the use frequency of the use data of the user successfully controlling the intelligent device, a corresponding use frequency threshold is further set according to the use frequency of the use data of the user successfully controlling the intelligent device. For example, when the use frequency of the "turn on the air conditioner" voice signal output by the user 1 is 5 times, the use frequency threshold of the "turn on the air conditioner" voice signal output by the user 1 may be set to 5 times, 4 times, etc.

A building module 404 used for building a voice database based on the sound frequency and the control keyword of the user successfully controlling the intelligent device, and the use frequency of the use data of the user successfully controlling the intelligent device;
then the voice database is built according to the sound frequency and the control keyword of the user successfully controlling the intelligent device, and the use frequency of the use data of the user successfully controlling the intelligent device. For example, the built voice database includes the sound frequency of the voice signal "turn on the air conditioner" output by the user 1, the control keyword "turn on the air conditioner" and the use frequency 5 times.

An obtaining module 405 used for obtaining the voice signal output currently, wherein the voice signal output currently includes: a voice frequency and a control keyword output currently;
when there is a need to control the intelligent device by voice, the voice signal output currently is obtained, that is, firstly the voice signal output currently for controlling the intelligent device is obtained. For example, the "turn on the air conditioner" voice signal output currently for controlling an air conditioner is obtained.

A determining module 406 used for searching for a corresponding use frequency in the voice database based on the voice frequency and the control keyword output currently;
after obtaining the voice signal output currently, the corresponding use frequency is further searched in the built voice database according to the voice frequency and the control keyword of the voice signal output currently. For example, the voice signal output currently is the "turn on the air conditioner" voice signal output by the user 1. Firstly, the same voice frequency as user 1 is searched in the voice database, and then the control keyword "turn on the air conditioner" is searched in the same voice frequency as user 1, and the use frequency with the same voice frequency as user 1 and the control keyword "turn on the air conditioner" is determined in the voice database; assuming that the use frequency is 5 times, then the determined use frequency of the voice signal output currently is 5 times.

A judging module 407 used for judging whether the use frequency of the voice signal output currently is greater than a use frequency threshold;
whether the use frequency of the voice signal output currently is greater than the set use frequency threshold is determined after determining the use frequency of the voice signal output currently.

A controlling module 408 used for controlling the intelligent device based on the voice signal output currently when the use frequency of the voice signal output currently is greater than the use frequency threshold;
the intelligent device can be controlled according to the voice signal output currently when the use frequency of the voice signal output currently is greater than the set use frequency threshold. For example, the air conditioner can be controlled to turn on according to the "turn on the air conditioner" voice signal output currently when the use frequency of the "turn on the air conditioner" voice signal output currently is greater than the set use frequency threshold.

The recording module 401 further used for recording the voice signal output currently, taking the voice signal output currently as the use data of the user successfully controlling the intelligent device, and dynamically adjusting the use frequency threshold;
when the intelligent device can be controlled by the voice signal output currently, the voice signal output currently is recorded, and the voice signal output currently is taken as the use data of the user successfully controlling the intelligent device; returning again to perform the above step, the use frequency threshold is reset again based on the updated use data of the user successfully controlling the intelligent device, that is, by dynamically adjusting the use frequency threshold, the voice recognition rate of the intelligent device can be further improved.

A forbidding module 409 used for forbidding controlling the intelligent device based on the voice signal output currently when the use frequency of the voice signal output currently is less than or equal to the use frequency threshold.

When the use frequency of the voice signal output currently is less than or equal to the set use frequency threshold, controlling the intelligent device based on the voice signal output currently is forbidden, that is, the voice signal output currently cannot control the intelligent device, which effectively prevents the intelligent device from being controlled by mistake.

In conclusion, on the basis of the above embodiment, the embodiment can build a voice database and set a use frequency threshold by recording use data of a user successfully controlling an intelligent device, obtain, through the built voice database, a use frequency of a voice signal output currently, and compare the use frequency of the voice signal output currently with the set use frequency threshold, which can improve a voice recognition rate of the intelligent device and effectively avoid operation by mistake;. and when the voice signal output currently can control the intelligent device, the voice signal output currently is further taken as the use data of the user successfully controlling the intelligent device, and the use frequency threshold is dynamically adjusted, thereby further improving the voice recognition rate of the intelligent device.

The various embodiments in the specification are described in a progressive manner, and each embodiment focuses on the differences from the other embodiments, and the same or similar parts between the various embodiments can refer to each other. For the apparatus disclosed in the embodiments, because it corresponds to the method disclosed in the embodiments, the description is relatively simple, and the description of the method section can be referred to relevant information.

Those skilled in the art may further appreciate that the units and algorithm steps of each example described in conjunction with the embodiments disclosed herein can be implemented by electronic hardware or computer software, or a combination thereof. In order to clearly illustrate the interchangeability of hardware and software, the components and steps of each example have been generally described in terms of functions in the above description. Whether these functions are performed in hardware or software depends on the specific application and design constraints of the technical solution. Those skilled in the art may use a different method for each specific application to implement the described functions, but such implementation should not be considered beyond the scope of the invention.

The steps of a method or algorithm described in conjunction with the embodiments disclosed herein may be directly implemented using hardware or a software module executed by a processor, or a combination thereof. The software module may be placed in a random access memory (RAM), an internal memory, a read only memory (ROM), an electrically programmable ROM, an electrically erasable programmable ROM, a registers, a hard disk, a removable disk, a CD-ROM, or in any other known form of storage medium in the technical field.

The above description of the disclosed embodiments enables those skilled in the art to implement or use the invention. Various modifications to these embodiments will be readily apparent to those skilled in the art, and the generic principles defined herein may be implemented in other embodiments without departing from the spirit or scope of the invention. Therefore, the invention is not intended to be limited to the embodiments shown herein, but is to be in accordance with the widest scope consistent with the principles and novel features disclosed herein.

## Claims

1. An optimization method for improving a voice recognition rate, the method comprising:
obtaining a voice signal output currently;
determining a use frequency of the voice signal output currently;
judging whether the use frequency of the voice signal output currently is greater than a use frequency threshold, and if so, and
controlling an intelligent device based on the voice signal output currently.

2. The method according to claim 1, wherein before the obtaining a voice signal output currently, the method further comprises:
recording use data of a user successfully controlling the intelligent device, wherein the use data comprises: a sound frequency and a control keyword of the user successfully controlling the intelligent device;
calculating a use frequency of the use data of the user successfully controlling the intelligent device;
setting a use frequency threshold based on the use frequency of the use data of the user successfully controlling the intelligent device; and
building a voice database based on the sound frequency and the control keyword of the user successfully controlling the intelligent device, and the use frequency of the use data of the user successfully controlling the intelligent device.

3. The method according to claim 2, wherein the voice signal output currently comprises: a voice frequency and a control keyword output currently, and the determining a use frequency of the voice signal output currently comprises:
searching for a corresponding use frequency in the voice database based on the voice frequency and the control keyword output currently.

4. The method according to claim 3, wherein after the controlling an intelligent device based on the voice signal output currently, the method further comprises:
recording the voice signal output currently, taking the voice signal output currently as the use data of the user successfully controlling the intelligent device, and dynamically adjusting the use frequency threshold.

5. The method according to claim 1, further comprising:
forbidding controlling the intelligent device based on the voice signal output currently when the use frequency of the voice signal output currently is less than or equal to the use frequency threshold.

6. An optimization system for improving a voice recognition rate, the system comprising:
an obtaining module used for obtaining a voice signal output currently;
a determining module used for determining a use frequency of the voice signal output currently;
a judging module used for judging whether the use frequency of the voice signal output currently is greater than a use frequency threshold; and
a controlling module used for controlling an intelligent device based on the voice signal output currently when the use frequency of the voice signal output currently is greater than the use frequency threshold.

7. The system according to claim 6, further comprising:
a recording module used for recording use data of a user successfully controlling the intelligent device, wherein the use data comprises: a sound frequency and a control keyword of the user successfully controlling the intelligent device;
a calculating module used for calculating a use frequency of the use data of the user successfully controlling the intelligent device;
a setting module used for setting the use frequency threshold based on the use frequency of the use data of the user successfully controlling the intelligent device; and
a building module used for building a voice database based on the sound frequency and the control keyword of the user successfully controlling the intelligent device, and the use frequency of the use data of the user successfully controlling the intelligent device.

8. The system according to claim 7, wherein the voice signal output currently comprises: a voice frequency and a control keyword output currently, and the determining module is specifically used for:
searching for a corresponding use frequency in the voice database based on the voice frequency and the control keyword output currently.

9. The system according to claim 8, wherein the recording module is further used for:
recording the voice signal output currently, taking the voice signal output currently as the use data of the user successfully controlling the intelligent device, and dynamically adjusting the use frequency threshold.

10. The system according to claim 6, further comprising:
a forbidding module used for forbidding controlling the intelligent device based on the voice signal output currently when the use frequency of the voice signal output currently is less than or equal to the use frequency threshold.
